Europäisches Patentamt

**European Patent Office**

Office européen des brevets

(19)

(11) Publication number: **0 103 997**
A2

(12)

# EUROPEAN PATENT APPLICATION

(21) Application number: **83304856.4**

(22) Date of filing: **23.08.83**

(51) Int. Cl.³: **G 05 F 1/445**
H 02 M 5/293, H 05 B 39/08

(30) Priority: **25.08.82 GB 8224366**

(43) Date of publication of application:
**28.03.84 Bulletin 84/13**

(84) Designated Contracting States:
**DE GB IT SE**

(71) Applicant: **Page Engineering Company Limited**
**PageWorks Forge Lane Green Street**
**Sunbury-on-Thames Middlesex TW16 6EQ(GB)**

(72) Inventor: **Matthews, Stephen**
**83A, Cottenham Park Road**
**Raynes Park London SW20(GB)**

(74) Representative: **Arthur, George Fitzgerald et al,**
**KILBURN & STRODE 30, John Street**
**London WC1N 2DD(GB)**

(54) A.C. power control system.

(57) This is an A.C. power control system in which push-pull load current controlliung switches (24,25) are each switched once in each duty cycles which consists of a number of supply cycles (23), the switching being at any phase angle in one of the cycles. There is a half cycle delay circuit (7) arranged so that switching of one switch will be at the same instant in a positive half cycle as the switching of the other switch in the next or previous negative half cycle. Capacitors (17) slow down the switching action of the switches.

Fig. I.

EP 0 103 997 A2

# A.C. POWER CONTROL SYSTEM

This invention relates to a system for controlling the power supply to an A.C. circuit, and one object is to provide high efficiency or accuracy of switching a load-current-controlling switch, without generating excessive radio frequency interference.

One application of the invention is to a light dimming control for aircraft lighting. A standard aircraft supply is at 115 volts 400 Hz and a convenient lighting supply is at 5 volts 400 Hz so a transformer is necessary. It is then important to reduce the D.C. component of load current , and so for that application a further object of the invention is to provide balanced switching of the A.C. supply as between positive and negative half cycles, and then it may be possible to avoid having a filter which tends to have large and heavy components.

According to one aspect of the present invention, in a method of controlling A.C. power supply to a load, one or more load-current-controlling switches are operated during only one of a number of supply cycles forming a duty cycle, so that a part of a duty cycle during which current flows in the load consists of 0,1,2,... or n, complete supply cycles and a part of another supply cycle.

If a semi-conductor switch is switched once in every supply cycle to control the power in the load, the turn-off time of the switch must be short, and substantial radio frequency interference can be generated. If on the other hand switching is at zero voltage cross over points in the supply cycle radio frequency interference is not generated, but there is poor resolution because switching can only be at either of two points in any complete supply cycle.

The invention has the advantage that by having a duty cycle made up of a whole number of supply cycles, and switching only once at any phase angle in one of those cycles, good resolution can be achieved while the amount of radio frequency interference is very much reduced. Indeed, it is possible to have slow switching of the load current controlling switch to reduce interference still more because switching only has to be performed once in a number of supply cycle. Switching losses are also reduced.

According to another aspect of the present invention, an A.C. power control system uses switching of a load-current-controlling switch only once in each duty cycle of a plurality of supply cycles, but at any phase angle in one of the supply cycles, the, or each switch having means causing termination of current in the load to be slowed down when the switch is operated.

Current will flow in the load for a part of a duty cycle, corresponding to a number of complete supply cycles, and a part of a further supply cycles terminated by the switching.

According to another aspect of the invention, an A.C. power control system includes a load-current-

controlling switch, a generator of a duty cycle ramp signal at least equal in length to a plurality of supply cycles, and means for deriving a switching signal for the switch at one instant only in each duty cycle, the instant being at a phase angle in a selected supply cycle depending on the power required in the load.

Conveniently, the system is a push-pull control system with two load-current-controlling switches, one for the positive half cycles of the supply, and one for the negative half cycles, and then there can be two switching signals, one for each switch together with a half cycle delay circuit for controlling the starts of the two switching signals, so that they will be at the same instants in a positive half cycle, as in the next or previous negative half cycle, and that will reduce the d.c. component of load current which is particularly desirable when a transformer is needed to continue the load voltage.

The/or each switching signal can be a square wave signal derived from a comparator of a control signal representing the desired load, and the ramp signal. The control signal could be derived from a comparison of an order signal and a feed-back signal representing the existing load.

The/or each load-current-controlling switch can have means for delaying its switching off; for example, if the switch is a transistor there may be a capacitor connected in the switching control circuit.

Preferably there are means synchronising the commencement of each ramp signal with the supply.

The invention may be carried into practice in various ways, and one embodiment will now be described by way of example, with reference to the accompanying drawings, in which:

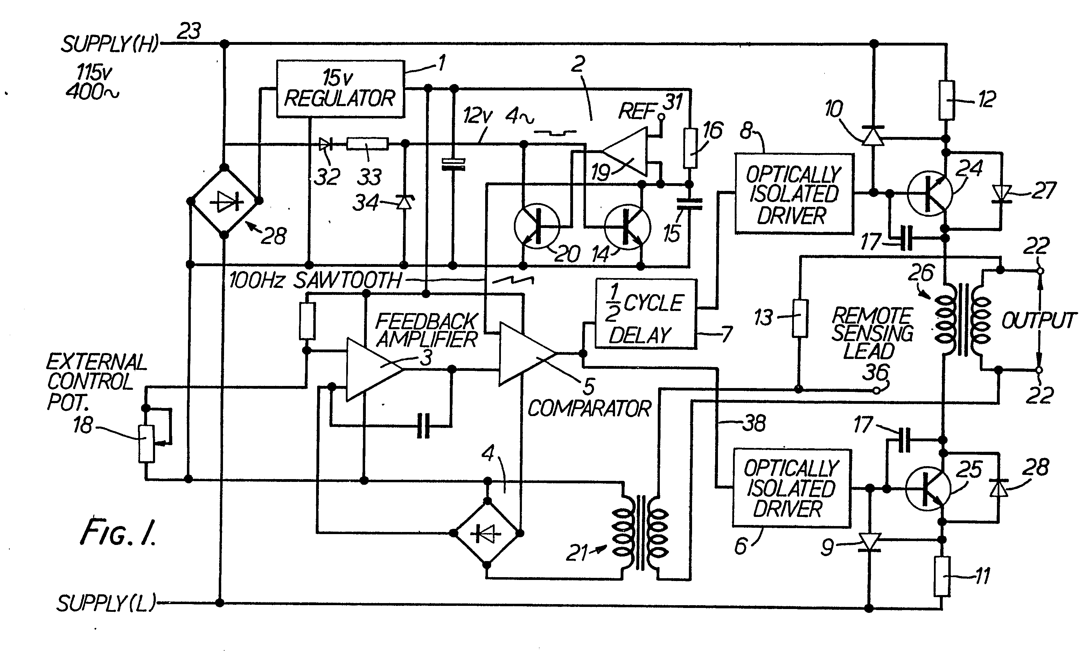

FIGURE 1 is a circuit diagram of an A.C. power control circuit for controlling the brightness of an aircraft lighting system; and

FIGURE 2 is a series of voltage characteristics illustrating the operation. of the circuit of FIGURE 1.

A load is connected across output terminals 22 to be supplied from a 115 volts 400 Hz supply 23 through a push-pull arrangement consisting of a transistor 24 or 25 in series with a resistor 12 or 11 between each side of the supply 23 and one side of the primary winding of an output transformer 26 whose secondary winding is connected to the output terminals 22. Each of the transistors 24,25 is shunted by a diode 27 or 28, so that each of the diodes conducts current through a different half cycle of the supply provided the transistor at the other side of the transformer 26 is conducting. Control of the output power is achieved by controlling the parts of repeated duty cycles during which the transistors 24 and 25 are conducting. The secondary voltage is 5 volts, 400 Hz.

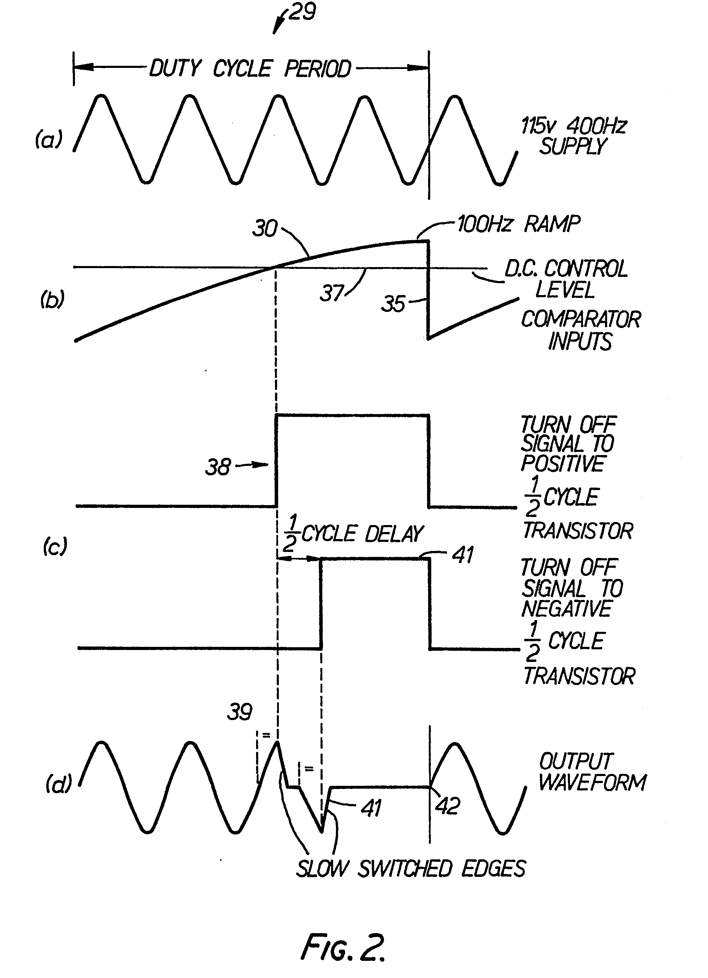

In the example being described a duty cycle period consists of four complete cycles of the 400 Hz supply 23, as shown at 29 in FIGURE 2. The duty cycle is determined by a saw tooth generator 2 which includes a capacitor 15 arranged to be charged through a resistor 16 from a 15 volts D.C. supply obtained at 1 from the supply 23 through a full wave

**0103997**

rectifier 28. The capacitor 15 is charged as shown at 30 to generate a ramp equal in length to four cycles of the supply 23 as determined by design of the values of the components 15 and 16, and the value of a reference potential 31 in relation to the D.C. voltage of the regulator 1.

A drive for the generator 2 is derived from the supply 23 through a rectifier 32 and a resistor 33 shunted by a Zener diode 34 to produce a 12 volts 400 Hz square wave switching supply on the base of a transistor 14 whose emitter collector path is connected-across the capacitor 15. The 12 volts square wave is normally short-circuited through the emitter collector path of a transistor 20 while the base of that transistor is appropriately biased during the initial part of the 100 Hz ramp 30 before the reference voltage 31 is reached. Thereafter the transistor 20 ceases to conduct and the next positive square pulse in the 12 volts 400 cycle square wave switches on the transistor 14 to short circuit and discharge the capacitor 'C' as indicated at 35 in FIGURE 2 after which the transistor 20 becomes conducting again and the ramp is repeated.

The 100 Hz ramp signal is supplied as one input to a comparator 5, the other input to which is derived from the output of a feed-back amplifier 3 representing the relationship between a command signal set on a control potentiometer 18 representing the desired power in the load, and a feed-back signal derived from the load. The feed-back signal can be derived from a remote sensing lead 36 from the load to give a regulated output, or could be derived from the output terminals 22 through a resistor 13 to give an unregulated output. The signal from the lead 36 or the resistor 13 is supplied to the primary winding of a feed-back transformer 21 whose secondary is coupled through a bridge rectifier 4 to one input of the feed-back amplifier 3, the other input to which is derived from the potentiometer 18. The output from the feed-back amplifier 3 is a D.C control level signal shown at 37 in FIGURE 2 and the output from the comparator 5 is a mark while the D.C. control level is less than the level of the 100 Hz ramp, and is a space while the control level is greater than that of the ramp, as indicated at 38 in FIGURE 2. That square wave signal 38 is used to control one of the push-pull transistors 25 through a driver 6 including optical isolation, by means of a lamp and photocell connection. The signal 38 controls switching of the positive halves of the 400 Hz supply 23 through the load, as indicated at 39.

The output from the comparator is delayed by half a cycle in a delay circuit 7 to produce a delayed square wave signal 41 which controls the push-pull transistor 24 through another optically isolated driver 8. The half cycle delay ensures that the negative half cycles are controlled by the transistor 24 at the same phase angle in a cycle as the positive half cycles are controlled and that enables a balanced output with no overall D.C. component to be achieved or substantially so. Switching of the negative half cycle is indicated at 41.

After the start of a mark 38 or 41, the reduction in current in the load is slightly delayed, by virtue of capacitors 17 connected across the base collector paths of the transistors 24 and 25, and that slow down in the rate of transistor turn-off reduces the level of radio frequency interference emission from the circuit. Since however there is only one turn-off for the positive half cycles, and one for the negative half cycles in each four cycle duty cycle period 29 the efficiency of the circuit is not seriously impaired by the slow switching.

Both marks 38 and 41 for the positive and negative half cycles respectively terminate at the end of the 100 Hz ramp 30, and voltage is restored to the load at a zero voltage crossing point, as indicated at 42.

The output terminals are shown as being supplied from the transformer 26, and that is suitable where the load is a bank of incandescent lamps, as described above. If however, the load was an electro-luminescent panel requiring a 115 volts supply, the transformer could be omitted and the output terminals 22 connected between the transistors 4 and 25. Of course the invention is not limited to the particular_____

load that is being controlled.

The transistors 24 and 25 can be protected gainst short circuit current by virtue of resistors 11 and 12 in series with the respective transistors. If the voltage across either of those resistors becomes excessive, it is arranged to turn on a thyristor 9 or 10 to short circuit the output from the drive circuit 6 or 8 so that the transistors 24 and 25 will be turned off.

It will be appreciated that although fine control is achieved by selecting the approprate phase angle in positive and negative supply cycles when the load is switched off in accordance with the control level, the switching off of the transistors is achieved slowly to avoid excessive radio interference emission, and that is possible because switching is only oncefor the positive half cycles, and once for the negative half cycles of the supply in each duty cycle period which itself consists of four complete supply frequency cycles. It is not necessary to have heavy filter components to eliminate radio fre uency interferences, and also the supply is useful in aircraft.

There are switching losses only once in each duty cycle for each transistor.

It is to be noted that the ramp 30 shown in FIGURE 2 is an exponential ramp as represented by the charging of a capacitor through a resistor but that can be designed to provide some compensation for the non linear relationship between the brightness of a lamp, and the current flowing in its filament, and then adjustment of the potentiometer 18 can
produce some effect over a substantial part of
the range of adjustment of the potentiometer.

5.

CLAIMS

1.    A method of controlling A.C. power supplied
to a load, in which one more load-current -controlling
switches (24,25) are operated to reduce load current
with slowed-down operation during one only of a number
of supply cycles forming a duty cycle (29) so that
a part of a duty cycle during which current flows
in the load consists of 0,1,2,... or n, complete
supply cycles and a part of another supply cycle,
and termination of current flow is not instantaneous.

2.    A method as claimed in Claim 1 in which there
are two load-current-controlling switches, one
for controlling load current during positive half
supply cycles, and the other for controlling load
current during negative half supply cycles, the
two switches being operated at the same phase angles
in adjacent positive and negative half supply cycles.

3.    A method as claimed in Claim 1 or Claim 2
in which the switches are operated in dependence
on a comparison of a load order signal and a load
feedback signal.

4.    An A.C. power control system which uses switching
of at least one load-current-controlling switch
(24) only once in each duty cycle (29) of a plurality
of supply cycles, but at any phase angle (39) in
one of the supply cycles, the, or each, switch having
means (17) causing termination of current in the
load to be slowed down when the switch is operated.

5.      An A.C. power control system including a load-current-controlling switch (24) a generator (2) of a duty cycle ramp signal (30) at least equal in length to a plurality of supply cycles, and means (5) for deriving a switching signal for the switch at one instant only in each duty cycle, the instant being at a phase angle in a selected supply cycle depending upon the power required in the load.

6.      A system as claimed in either of Claims 4 and 5 having two load-current-controlling switches, one (24) for the positive half cycle of the supply, and one (25) for the negative half cycles, and including means for deriving two switching signals one for each switch together with a half cycle delay circuit (7) for controlling the start of the one switching signal in relation to that of the other.

7.      A system as claimed in Claim 6 in which each switching signal is a square wave signal (38) derived from a comparator (5) of a control signal (37) representing the desired load, and a ramp signal (30) lasting for a number of supply cycles.

8.      A system as claimed in any of Claims 4-7 in which a control signal for controlling the switch or switches is derived from a comparison of an order signal (18) and a feed-back signal (3) representing the existing load.

9.    A system as claimed in any of Claims 4-8
in which the/or each load-current-controlling switch
has a capacitor (17) for slowing its action of
switching off.

10.    A system as claimed in any of Claims 7,8,
and 9 including means (32,33) synchronising the
commencement of the ramp signal with the supply.

FIG. I.

FIG.2.